# NEUE EUROPÄISCHE PATENTSCHRIFT

(11) **EP 2 181 749 B2**
(45) Veröffentlichungstag und Bekanntmachung des Hinweises auf die Entscheidung über den Einspruch: **03.10.2018**
(45) Hinweis auf die Patenterteilung: 30.03.2011
(21) Anmeldenummer: 08168287.4
(22) Anmeldetag: 04.11.2008
(51) Int. Cl.: B01D 46/24

(54) **Dieselpartikelfilter mit verbesserten Staudruckeigenschaften**
Diesel particulate filter with improved back pressure properties
Filtre à particules diesel doté de propriétés de pression dynamique améliorées

(43) Veröffentlichungstag der Anmeldung: 05.05.2010
(60) Teilanmeldung: 11000800.0
(73) Patentinhaber: Umicore AG & Co. KG, 63457 Hanau-Wolfgang (DE)
(72) Erfinder: Dornhaus, Franz, 60599 Frankfurt am Main (DE); Frantz, Stéphanie, 79539 Lörrach (DE); Jeske, Gerald, 63543 Neuberg (DE)

(56) Entgegenhaltungen:
- EP-A1- 1 437 491
- EP-A1- 2 158 956
- DE-A1-102006 040 739
- DE-A1-102007 021 468
- JP- - H09 173 866
- JP-A- 2002 320 807
- JP-A- 2007 144 371
- US-A- 4 749 671
- MELSCOET-CHAUVEL I.ET AL: 'High porosity cordierite filter development for Nox/PM reduction' DEVELOPMENTS IN ADVANCED CERMAMICS AND COMPOSITES Bd. 26, Nr. 8, 2005, Seiten 11 - 19

## Beschreibung

Die Erfindung betrifft ein Dieselpartikelfilter mit verbesserten Staudruckeigenschaften, das sich zur Entfernung von Dieselruß aus dem Abgas von Dieselmotoren, insbesondere in Fahrzeugen, eignet.

Das Abgas von mit Dieselmotor betriebenen Kraftfahrzeugen enthält neben den Schadgasen Kohlenmonoxid (CO) und Stickoxide (NOₓ) auch Bestandteile, die aus der unvollständigen Verbrennung des Kraftstoffs im Brennraum des Zylinders herrühren. Dazu gehören neben Rest-Kohlenwasserstoffen, die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoffhaltigen Feststoff-Teilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

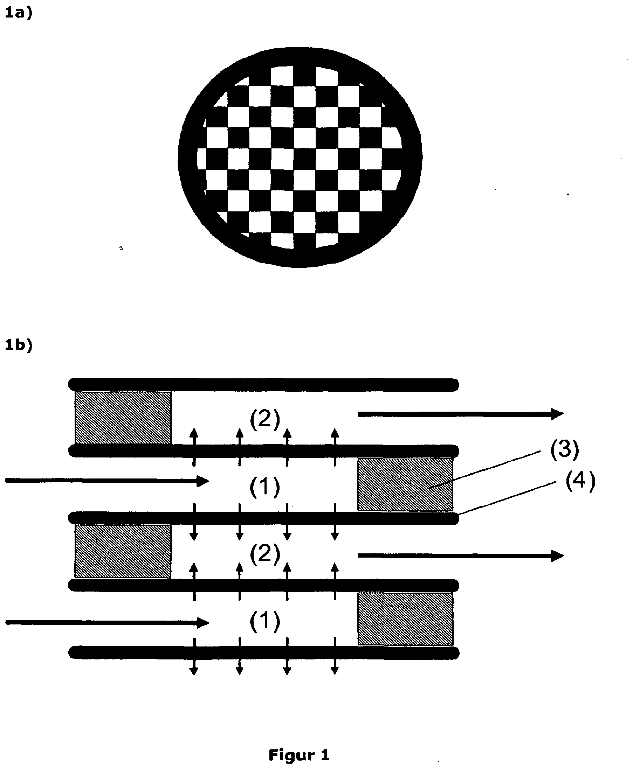

Zur Entfernung dieser Partikelemissionen werden Partikelfilter verwendet. Vor dem Hintergrund der aktuellen Feinstaub-Problematik werden zunehmend keramische Wandflußfiltersubstrate eingesetzt, die sich durch eine hohe Filtereffizienz auch gegenüber kleinen Partikeln auszeichnen. Diese Wandflußfiltersubstrate sind keramische Wabenkörper mit wechselseitig gasdicht verschlossenen An- und Abströmkanälen. Figur 1 zeigt schematisch ein solches Wandflußfiltersubstrat. Das in die Anströmkanäle (1) einströmende Partikel-haltige Abgas wird durch den auf der Austrittsseite befindlichen gasdichten Verschlußstopfen (3) zum Durchtritt durch die poröse Wand (4) gezwungen und tritt aus den auf der Anströmseite verschlossenen Abströmkanälen (2) aus dem Wandflußfiltersubstrat wieder aus. Dabei wird Dieselruß aus dem Abgas herausgefiltert.

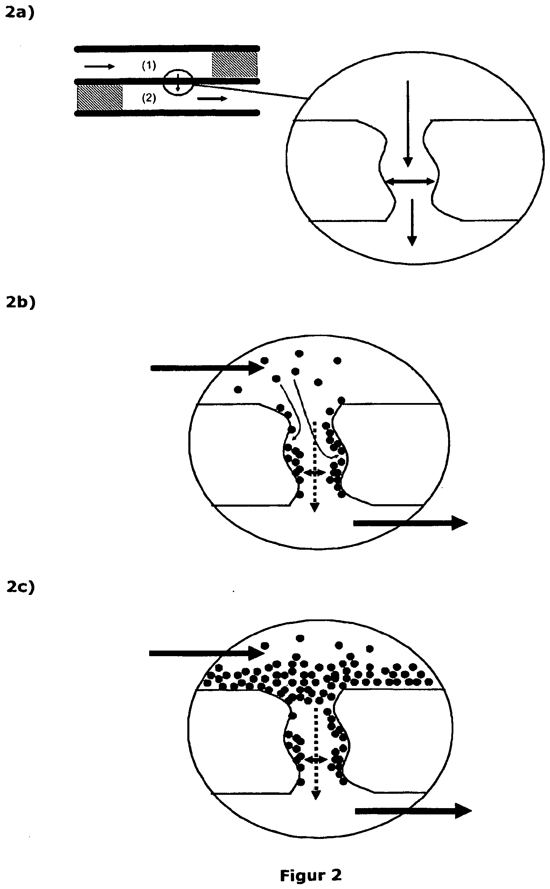

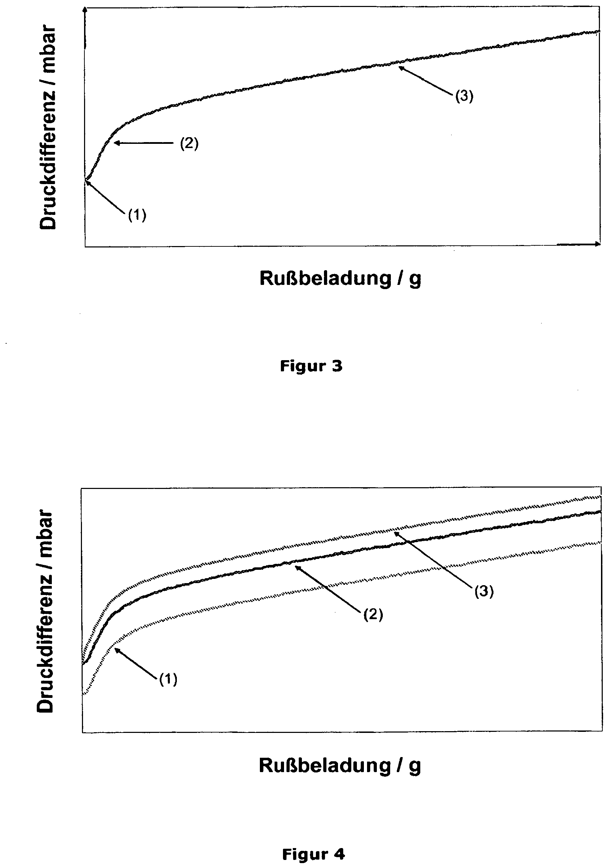

Die Rußfiltration im Wandflußfiltersubstrat beim Durchtritt durch die Wand kann als zweistufiger Vorgang beschrieben werden. In einer ersten Phase, der sogenannten "Tiefenfiltrationsphase" bleiben beim Durchtritt des partikelhaltigen Abgases durch die Wand Rußpartikel in den Poren der Wand haften [Figur 2b]. Dies führt zu einer Verkleinerung des Porendurchmessers in der Wand und infolgedessen zu einem sprunghaften Anstieg des Staudruckes über dem Wandflußfiltersubstrat. Sobald der Porendurchmesser zu stark verringert ist, um mittleren und größeren Rußteilchen den Eintritt in die Pore zu gestatten, setzt eine Filterkuchenbildung [Figur 2c] im gesamten Anströmkanal ein. Während des Aufbaus des Filterkuchens steigt der Staudruck über dem Wandflußfiltersubstrat nur noch linear mit der gefilterten Menge Dieselruß. Figur 3 zeigt schematisch die Entwicklung des Staudruckes über dem Wandflußfilter ausgehend vom rußfreien Filter als Funktion der aufgenommenen Rußmenge. (1) zeigt den Staudruck des unberußten Filters, (2) den Anstieg während der Tiefenfiltrationsphase und (3) die lineare Staudruckzunahme während der Filterkuchenbildungsphase.

Der vorstehend beschriebene zweistufige Vorgang der Rußfiltration im Wandflußfiltersubstrat ist allgemein gültig; er wird bei nicht beschichteten Wandflußfiltersubstraten ebenso beobachtet, wie bei Wandflußfiltersubstraten mit katalytisch aktiver Beschichtung, mit Rußzündbeschichtung oder mit Beschichtungen, die spezielle Ankerstrukturen zur Verbesserung der Filtrationseffizienz aufweisen. Die Ausgangskonfiguration des Wandflußfilters beeinflußt vornehmlich den Ausgangsstaudruck des Bauteils in unberußtem Zustand, wie Figur 4 zu entnehmen ist. Katalytisch beschichtete Wandflußfiltersubstrate oder solche mit einer typischen Rußzündbeschichtung (2) zeigen in unberußtem Zustand einen deutlich höheren Ausgangsstaudruck als unbeschichtete Wandflußfiltersubstrate (1); der Verlauf der Staudruckkurve mit zunehmender Rußbeladung aber ist mit dem Verlauf der Staudruckkurve des unbeschichteten Substrats (1) vergleichbar. Ein Substrat mit einer die Filtrationseffizienz erhöhenden Beschichtung (3) zeigt in der Regel einen Ausgangsstaudruck in unberußtem Zustand, der dem Ausgangsstaudruck von katalytisch beschichteten Wandflußfiltern vergleichbar ist. Der Anstieg des Staudruckes während der Tiefenfiltrationsphase ist jedoch erheblich steiler, da sich der Porenradius infolge der gezielt eingebauten Ankerstrukturen noch schneller verengt.

Grundsätzlich ist ein hoher Staudruck ebenso wie ein schneller Anstieg des Staudruckes bei Dieselpartikelfiltern, die in Kraftfahrzeugen eingesetzt werden, unerwünscht, da dieser im Betrieb dazu führt, daß Motorleistung aufgewendet werden muß, um Abgas durch die Abgasreinigungsanlage zu drücken. Diese Motorleistung geht für den Antrieb des Fahrzeugs verloren. Die optimale Ausnutzung der Motorleistung für den Antrieb ist jedoch gleichbedeutend mit einer Erhöhung der effektiven Kraftstoffausnutzung und bedeutet Kraftstoffverbrauchsvorteile und somit auch verminderte CO₂-Emissionen des Fahrzeugs.

Die DE-A-102006040739 beschreibt das Füllen von Mikrorissen in keramischen Partikelfiltern.

Es ist Aufgabe der vorliegenden Erfindung, ein Dieselpartikelfilter zur Verfügung zu stellen, das sich durch verbesserte Staudruckeigenschaften auszeichnet, ohne dabei eine verminderte Filtrationseffizienz oder verschlechterte katalytische Eigenschaften oder verschlechterte Rußzündeigenschaften zu zeigen.

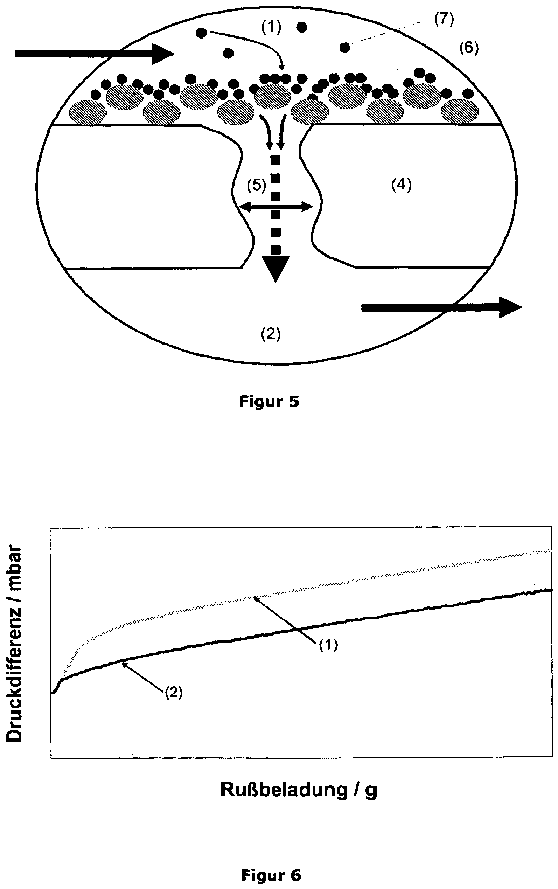

Diese Aufgabe wird gelöst durch ein Dieselpartikelfilter enthaltend ein keramisches Wandflußfiltersubstrat und eine in den Anströmkanälen aufgebrachte Beschichtung aus hochschmelzendem Material, die so beschaffen ist, daß sie die die Anströmkanäle und Abströmkanäle verbindenden Poren in der Wand anströmseitig für Rußpartikel verschließt, ohne dabei den Durchtritt der gasförmigen Abgasbestandteile zu verhindern [Figur 5].

Dies wird erreicht durch eine Beschichtung, die mehrheitlich ein oder mehrere hochschmelzende Oxide enthalten, deren Partikelgrößen den Porengrößen in der Wand des Wandflußfiltersubstrates derart angepasst wird, daß der d₅₀-Wert der Partikelgrößenverteilung der Oxide gleich oder größer dem d₅-Wert der Porengrößenverteilung des Wandflußfiltersubstrates ist, wobei zugleich der d₉₀-Wert der Partikelgrößenverteilung der Oxide gleich oder größer dem d₉₅-Wert der Porengrößenverteilung des Wandflußfiltersubstrates ist, wobei die Oxide eine Partikelgrößenverteilung aufweisen mit einem d₅₀-Wert zwischen 10 und 15 µm und einem d₉₀-Wert zwischen 25 und 40 µm. Dabei ist unter dem d₅₀-Wert bzw. dem d₉₀-Wert der Partikelgrößenverteilung der Oxide zu verstehen, daß 50 % bzw. 90 % des Gesamtvolumens der Oxide nur solche Partikel enthält, deren Durchmesser kleiner oder gleich dem als d₅₀ bzw. d₉₀ angegebenen Wert ist. Unter d₅-Wert bzw. dem d₉₅-Wert der Porengrößenverteilung des Wandflußfiltersubstrates ist zu verstehen, daß 5 % bzw. 95 % des gesamten, durch Quecksilberporosimetrie bestimmbaren Porenvolumens gebildet werden durch Poren, deren Durchmesser kleiner oder gleich dem als d₅ bzw. als d₉₅ angegebenen Wert ist.

Die Beschichtung führt dazu, daß die Tiefenfiltration deutlich vermindert und somit der während der Tiefenfiltrationsphase zu beobachtende Staudruckanstieg signifikant verringert wird. Figur 6 zeigt schematisch den Effekt, der durch die aufgebrachte Beschichtung erzielt wird.

Das Konzept der Staudruck-Verringerung durch Aufbringung einer die Tiefenfiltration vermindernden Beschichtung in den Anströmkanälen kann grundsätzlich auf alle Wandflußfiltersubstrate angewandt werden. Bevorzugte Ausgestaltungen der erfindungsgemäßen Bauteile enthalten Wandflußfiltersubstrate, die aus Siliciumcarbid, Cordierit oder Aluminiumtitanat gefertigt sind und die in den Wänden zwischen An- und Abströmkanälen Poren mit einem mittleren Durchmesser zwischen 5 und 50 µm, besonders bevorzugt zwischen 10 und 25 µm, aufweisen.

Die wichtigsten erfindungsgemäßen Ausführungsformen werden nachfolgend detailliert beschrieben. Die erfindungsgemäße Beschichtung, deren Funktion darin liegt, die Tiefenfiltration deutlich zu vermindern, wird im folgenden als "Overcoat" bezeichnet.

In Anspruch 1 ist ein erfindungsgemäßes Partikelfilter angegeben mit einen Overcoat, der mehrheitlich ein oder mehrere hochschmelzende Oxide enthält. Damit der Overcoat so beschaffen ist, daß die die Anströmkanäle und Abströmkanäle verbindenden Poren für Rußpartikel verschlossen werden, ohne dabei den Durchtritt der gasförmigen Abgasbestandteile zu verhindern, müssen die für den Overcoat verwendeten Materialien sorgfältig ausgewählt werden. Insbesondere müssen die zu verwendenden Oxide eine Partikelgrößenverteilung aufweisen, die der Porengrößenverteilung in der Wand des Substrats angepaßt ist. Die bestimmungsgemäße Funktion des Overcoats wird dann erfüllt, wenn der d₅₀-Wert der Partikelgrößenverteilung der Oxide gleich oder größer dem d₅-Wert der Porengrößenverteilung des Wandflußfiltersubstrates, und zugleich der d₉₀-Wert der Partikelgrößenverteilung der Oxide gleich oder größer dem d₉₅-Wert der Porengrößenverteilung des Wandflußfiltersubstrates ist. (Was unter den entsprechenden dₓ-Werten der Partikelgrößenverteilung einerseits, und der Porengrößenverteilung andererseits zu verstehen ist, wurde vorstehend bereits erläutert.) Bevorzugt werden Oxide eingesetzt, deren Partikelgrößenverteilung einen d₅₀-Wert von 10 bis 15 µm und einen d₉₀-Wert von 30 bis 35 µm aufweisen. Letztere zeichnen sich neben einer optimierten Funktionalität hinsichtlich der Verringerung der Tiefenfiltration auch durch eine besonders gute Haftung auf dem Wandflußfiltersubstrat aus.

Bei einigen Oxiden lassen sich die geforderten Partikelgrößenbereiche gut durch gezieltes Vormahlen des Oxids vor Einbringen in das Wandflußfiltersubstrat einstellen. Um diesen Vorteil umfassend nutzen zu können, werden die Oxide des Overcoats bevorzugt ausgewählt aus der Gruppe bestehend aus Aluminiumoxid, Selten-Erdmetall-stabilisiertes Aluminiumoxid, Selten-Erdmetall-Sesquioxid, Titandioxid, Zirkonoxid, Cer-Zirkon-Mischoxid, Vanadiumpentoxid, Vanadiumtrioxid, Wolframtrioxid, Molybdäntrioxid und Mischungen davon. Besonders bevorzugt sind Oxide ausgewählt aus der Gruppe bestehend aus Aluminiumoxid, Selten-Erdmetall-stabilisiertes Aluminiumoxid, Selten-Erdmetall-Sesquioxid, Zirkonoxid und Mischungen davon.

Zeolith-basierte Materialien eignen sich im allgemeinen nicht als oxidischer Overcoat, da die Partikelgrößen synthetischer Zeolithe meist mit mittleren Partikelgrößen von d₅₀ < 3 µm deutlich unter den hier geforderten Werten liegen.

Um eine möglichst optimale Funktionsweise des oxidischen Overcoats bei zugleich möglichst geringem Einfluß der die Tiefenfiltration vermindernden Beschichtung auf den Ausgangsstaudruck zu gewährleisten, wird der Overcoat bevorzugt mit einer Schichtdicke von 10 bis 150 µm, besonders bevorzugt 20 bis 100 µm in den Anströmkanälen des Wandflußfiltersubstrates aufgebracht. Für die vorstehend genannte Auswahl an möglichen oxidischen Overcoat-Materialien lassen sich entsprechende Schichtdicken bei einer Beladung von 1 bis 50 g/L Feststoff, bezogen auf das Volumen des Wandflußfiltersubstrates, darstellen. Besonders bevorzugt sind Beladungen von 1 bis 20 g/L Feststoff, ganz besonders vorteilhaft Schichtdicken von 1 bis 10 g/L Feststoff, bezogen auf das Volumen des Wandflußfiltersubstrates.

Zur Herstellung eines erfindungsgemäßen Dieselpartikelfilters mit oxidischem Overcoat wird ein geeignetes Oxid ausgewählt und in einer Menge Wasser suspendiert, die mindestens zweimal so groß ist, wie das Porenvolumen des ausgewählten Oxids. Gegebenenfalls wird die so erhaltene wässrige Suspension des Oxids mit Hilfe einer Dyno-Mühle bis zur Einstellung der geforderten Partikelgrößenverteilung vermahlen. Der Zusatz von Hilfstoffen zur Erhöhung der Sedimentationsstabilität der Suspension in diesem Stadium des Herstellprozesses ist für die Funktion des herzustellenden Overcoats unschädlich, sofern sich diese Hilfsstoffe bei der Kalzination im letzten Präparationsschritt vollständig thermisch entfernen lassen. Auch die Beimischung von haftvermittelnden Agentien wie Kieselsäure und anderen anorganischen Solen ist unschädlich und kann in einigen Ausführungsformen gegebenenfalls von Vorteil sein. Die Suspension wird nach dem gegebenenfalls erfolgten Einstellen der Partikelgrößenverteilung durch Vermahlen in die Anströmkanäle des zu beschichtenden Wandflußfiltersubstrates eingepumpt. Nach vollständigem Füllen der Anströmkanäle mit der Suspension wird die überstehende Suspension aus dem Wandflußfiltersubstrat wieder herausgesaugt. Dabei ist die Saugleistung so zu wählen, daß am Ende des Vorgangs die vorgegebene Beladungsmenge Feststoff im Anströmkanal verbleibt. Das so hergestellte beschichtete Wandflußfiltersubstrat wird bei 80 bis 180°C im Heißluftstrom getrocknet und anschließend bei 250 bis 600°C, bevorzugt bei 300 bis 500°C, kalziniert. Es ist nach Kalzination ohne weitere Behandlung einsatzfertig.

Es wurde bereits erwähnt, daß das Konzept der Staudruck-Verringerung durch Aufbringung einer die Tiefenfiltration vermindernden Beschichtung (Overcoat) in den Anströmkanälen grundsätzlich auf alle Wandflußfiltersubstrate angewandt werden kann. Dazu zählen auch katalytisch beschichtete Wandflußfiltersubstrate oder Wandflußfiltersubstrate mit die Rußzündtemperatur absenkenden Beschichtungen.

Beispielsweise können Overcoats aus hochschmelzendem oxidischem Material, wie sie vorstehend beschrieben wurden, auf Wandflußfiltersubstrate aufgebracht werden, die eine katalytisch aktive Beschichtung und/oder eine die Rußzündtemperatur absenkende Beschichtung enthalten, welche überwiegend in den Poren der Wand zwischen An- und Abströmkanälen vorliegt.

Je nach Fahrzeugapplikation kann es auch vorteilhaft sein, auf ein erfindungsgemäßes Dieselpartikelfilter mit Overcoat eine zusätzliche katalytisch aktive Beschichtung oder/und eine zusätzliche, die Rußzündtemperatur absenkende Beschichtung aufzubringen. Eine solche Ausführungsform hat jedoch grundsätzlich den Nachteil, daß durch das übereinander Anordnen zweier Schichten in den Anströmkanälen der Initialstaudruck des unberußten Filters exorbitant ansteigt. Daher kommen solche Ausführungsformen nur für Sonderfahrzeugapplikationen in Frage, bei denen der Kraftstoffverbrauch nebensächlich ist, für die aber beispielsweise aufgrund geringer durchschnittlicher Betriebsbedingungen eine Rußzündung bei sehr geringen Temperaturen und/oder ein hohes Maß an kontinuierlicher Partikelfallenregeneration (CRT®-Effekt) gefordert ist, so zum Beispiel für Baumaschinen und andere sogenannte "Non-Road"-Applikationen.

Für viele Fahrzeugapplikationen besonders gut geeignete Ausführungsformen erhält man, wenn man ausgehend von einem erfindungsgemäßen Dieselpartikelfilter mit oxidischem Overcoat zusätzlich eine katalytische Aktivierung der die Tiefenfiltration vermindernden Beschichtung vornimmt.

Wie vorstehend beschrieben werden die Oxide des Overcoats bevorzugt ausgewählt aus der Gruppe bestehend aus Aluminiumoxid, Selten-Erdmetall-stabilisiertes Aluminiumoxid, Selten-Erdmetall-Sesquioxid, Titandioxid, Zirkonoxid, Cer-Zirkon-Mischoxid, Vanadiumpentoxid, Vanadiumtrioxid, Wolframtrioxid, Molybdäntrioxid und Mischungen davon. Diese Oxide bilden nicht selten die Basis für die Rußzündtemperatur absenkende Beschichtungen und/oder für oxidationskatalytisch oder reduktionskatalytisch aktive Beschichtungen, die dazu verwendet werden können, die im Dieselabgas außer Dieselruß enthaltenen Schadgase Kohlenmonoxid, Rest-Kohlenwasserstoffe und Stickoxide in nicht schädliche Komponenten umzuwandeln. Somit kann eine zusätzliche katalytische Aktivierung der die Tiefenfiltration vermindernden Beschichtung durch Beimischung oder Imprägnierung von oxidations- oder reduktionskatalytisch wirkenden Komponenten und/oder von Komponenten, die die Rußzündtemperatur absenken können, erreicht werden.

Die Erfindung wird nachfolgend anhand einiger Figuren und Beispiele näher erläutert.

Es zeigen:
- Figur 1:: Schematische Darstellung eines Wandflußfiltersubstrates; Figurenteil (1a) zeigt die Aufsicht auf die Stirnfläche mit wech- selseitig (- in weiß dargestellt -) offenen und (- in schwarz dargestellt -) gasdicht verschlossenen Kanälen; Figurenteil (1b) zeigt einen Ausschnitt aus dem Wandflußfilter- substrat als Prinzipskizze, die die Funktionsweise verdeutlicht; darin bezeichnen: die Pfeile die Strömungsrichtung des Abgases;: (1) Anströmkanal; (2) Abströmkanal; (3) gasdichter Verschlußstopfen; (4) poröse, d.h. gasdurchlässige Wand.
- Figur 2:: Schematische Darstellung des Rußfiltrationsprozesses in einem Wandflußfiltersubstrat; darin bezeichnen: die Pfeile die Strömungsrichtung des Abgases;: (1) Anströmkanal; (2) Abströmkanal; Figurenteil (2a) zeigt einen vergrößerten Ausschnitt aus der Wand des Wandflußfiltersubstrates mit Pore; Figurenteil (2b) zeigt schematisch den Ablauf der Tiefenfiltra- tion; Figurenteil (2c) zeigt schematisch den Ablauf der Filterkuchen- bildung;
- Figur 3:: Schematische Darstellung der Entwicklung des Staudruckes über einem Wandflußfiltersubstrat als Funktion der aufgenom- menen Rußmenge; darin bezeichnet (1) den Anfangsstaudruck in rußfreiem Zustand, (2) den Staudruckanstieg während der Tiefenfiltrationspha- se; (3) den Staudruckanstieg während der Filterkuchenbildungs- phase
- Figur 4:: Schematische Darstellung der Entwicklung des Staudruckes über unterschiedlichen Wandflußfiltersubstraten als Funktion der aufgenommenen Rußmenge; darin bezeichnet (1) die Entwicklung des Staudrukkes über einem unbeschich- teten Wandflußfiltersubstrat, (2) die Entwicklung des Staudruckes über einem Wandfluß- filtersubstrat mit katalytischer Beschichtung oder Ruß- zündbeschichtung; (3) die Entwicklung des Staudruckes über einem Wandfluß- filtersubstrat mit einer Beschichtung, die spezielle Ankerstrukturen zur Verbesserung der Filtrationseffizienz auf- weist
- Figur 5:: Schematische Darstellung eines Ausschnitts eines erfindungs- gemäßen Dieselpartikelfilters enthaltend ein keramisches Wandflußfiltersubstrat und eine in den Anströmkanälen (1) auf- gebrachte Beschichtung (6) aus hochschmelzendem Material, die so beschaffen ist, daß sie die die Anströmkanäle (1) und die Abströmkanäle (2) verbindenden Poren (5) in der Wand (4) an- strömseitig für Rußpartikel (7) verschließt, ohne dabei den Durchtritt der gasförmigen Abgasbestandteile zu verhindern.
- Figur 6:: Schematische Darstellung der Entwicklung des Staudruckes (1) über einem Wandflußfiltersubstrat nach dem Stand der Technik ohne eine die Tiefenfiltration vermindernde Be- schichtung; (2) über einem erfindungsgemäßen Wandflußfiltersubstrat mit einer die Tiefenfiltration vermindernden Beschich- tung.

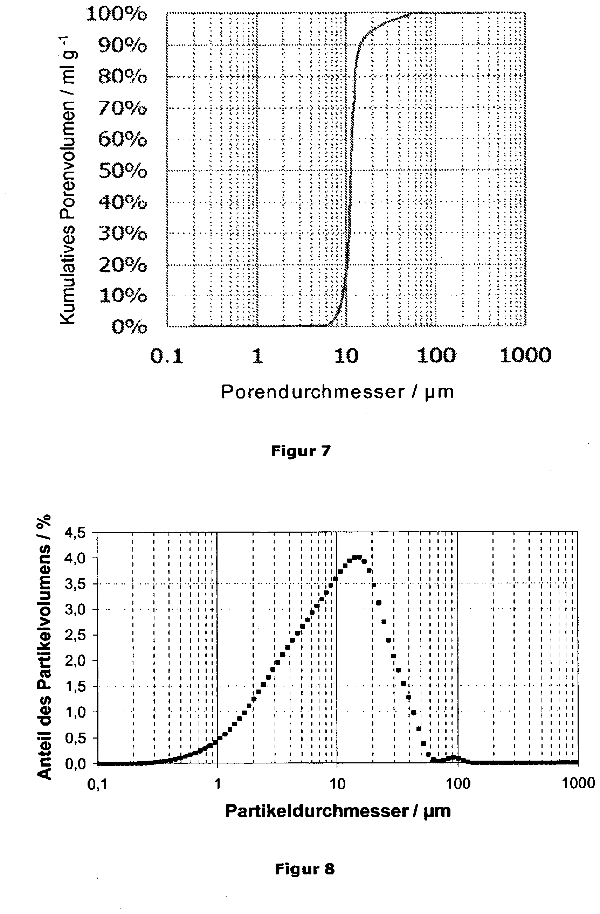

- Figur 7:: Mit Quecksilberporosimetrie bestimmte Porengrößenverteilung des keramischen Wandflußfiltersubstrates SD 031 der Fa. Ibiden in einfach-logarithmischer Auftragung
- Figur 8:: Partikelgrößenverteilung des Oxids zur Herstellung des oxidi- schen Overcoats aus Beispiel 2 nach Mahlung in einfach- logarithmischer Auftragung;

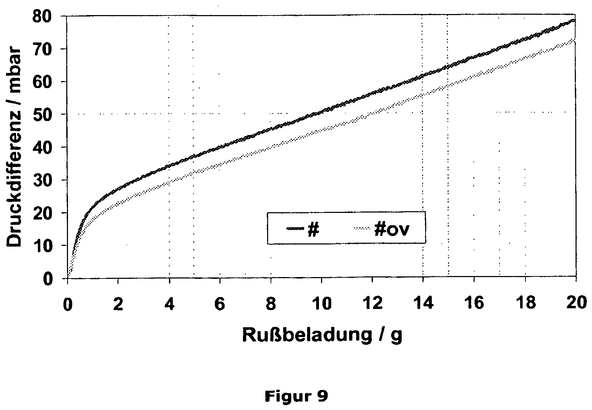

- Figur 9:: Staudruck-Vergleichsmessung des Dieselpartikelfilters ohne Overcoat (#) aus dem Vergleichsbeispiel und des Dieselpar- tikelfilters mit Overcoat (#ov) aus Beispiel 2, wobei beide gemessenen Kurven durch Subtraktion des um 1 verringerten Achsenabschnittswertes der Kurve für das Bauteil # ohne Overcoat korrigiert wurden.

### Vergleichsbeispiel:

Zur Herstellung katalytisch beschichteter Dieselpartikelfilter nach dem Stand der Technik wurden zwei keramische Wandflußfiltersubstrate aus Aluminiumtitanat der Firma Corning mit einer Beschichtung aus katalytisch aktivem Material versehen.

Hierzu wurde zunächst ein edelmetallhaltiges Pulver als katalytisch aktive Komponente der Beschichtung hergestellt. Zum Erhalt dessen wurde ein mit 3 Gew.-% Lanthansesquioxid stabilisiertes γ-Aluminiumoxid mit einem Gemisch aus einer wässrigen Lösung einer Platinvorläuferverbindung und einer wässrigen Lösung einer Palladiumvorläuferverbindung porenfüllend imprägniert, wobei die Gesamtmenge der wässrigen Lösung, mit der das y-Aluminiumoxid behandelt wurde, so gewählt war, daß die Rieselfähigkeit des Pulvers erhalten blieb. Das aus der Imprägnierung resultierende Feuchtpulver wurde über die Dauer von 10 Stunden bei 120°C getrocknet und anschließend für vier Stunden bei 300°C kalziniert. Das fertige edelmetallhaltige Pulver enthielt 11 Gew.-% Edelmetall, bezogen auf die Pulvergesamtmenge, mit einem Platin: Palladium-Verhältnis von 2:1.

Die so gewonnene katalytisch aktive Komponente der Beschichtung wurde unter Rühren in einer Menge Wasser suspendiert, die etwa der zweieinhalbfachen Wasseraufnahme des Pulvers entsprach. Die daraus erhaltene Suspension wurde unter Zuhilfenahme einer Dyno-Mühle gemahlen, bis die Partikelgrößenverteilung einen d₁₀₀-Wert zeigte, der kleiner als 7 µm war.

Die Suspension wurde nach Einstellung eines geeigneten Feststoffgehaltes von unter 20 % durch Einpumpen in die Anströmkanäle und anschließendes Absaugen in die Wände der oben genannten Wandflußfiltersubstrate eingebracht. Die Filter wurden anschließend bei 120°C im Heizgebläse getrocknet und für die Dauer von vier Stunden bei 300°C in einem Stationärofen kalziniert. Die aufgebrachte Menge katalytisch aktiver Beschichtung betrug in den fertigen Dieselpartikelfiltern etwa 28 g/L, bezogen auf das Volumen des Bauteils.

### Beispiel 1:

Zur Herstellung eines erfindungsgemäßen Dieselpartikelfilters wurde eines der im Vergleichsbeispiel erhaltenen katalytisch beschichteten Dieselpartikelfilter mit einem oxidischen Overcoat versehen.

Zur Herstellung einer geeigneten Beschichtungssuspension für den Overcoat wurde eine geeignete Menge von mit 3 Gew.-% Lanthansesquioxid stabilisiertem Alminiumoxid unter Rühren in einer Menge Wasser suspendiert, die etwa der zweieinhalbfachen Wasseraufnahme des eingesetzen Oxids entsprach. Die so erhaltene Suspension wurde unter Zuhilfenahme einer Dyno-Mühle gemahlen, bis die Partikelgrößenverteilung einen d₅₀-Wert von ca. 10 µm (exakt: 10,35 µm) und einen d₉₀-Wert von ca. 30 µm (exakt: 29,48 µm) aufwies. Figur 8 zeigt die Partikelgrößenverteilung des fertig gemahlenen suspendierten Oxids, gemessen mit dem Partikelgrößenmeßgerät LS230 von Beckman Coulter.

Die Suspension wurde nach Einstellen eines geeigneten Feststoffgehaltes von ca. 18 % Feststoff auf eines der bereits katalytisch beschichteten Dieselpartikelfilter aus dem Vergleichsbeispiel durch Einpumpen der Beschichtungssuspension in die Anströmkanäle und anschließendes Absaugen aufgebracht. Das Filter wurde anschließend bei 120°C im Heizgebläse getrocknet, und für die Dauer von vier Stunden bei 350°C in einem Stationärofen kalziniert. Die dem Overcoat zuzuordnende Beladungsmenge im fertigen Dieselpartikelfilter betrug 5 g/L bezogen auf das Volumen des Bauteils.

Das Staudruck-Verhalten unter Rußbeladung wurde vergleichend am im Vergleichsbeispiel hergestellten katalytisch beschichteten Dieselpartikelfilter nach dem Stand der Technik und am erfindungsgemäßen Dieselpartikelfilter aus Beispiel 2 untersucht. Die Aufnahme der Staudruck-Kurven während der beladung der Filter mit Ruß erfolgte mit dem "Diesel Particulate Generator" DPG der Firma Cambustion, dessen Meßprinzip und -methodik dem Fachmann geläufig ist, unter den vom Lieferanten des Geräts empfohlenen Standardbedingungen.

Figur 9 zeigt das Ergebnis der vergleichenden Untersuchung des Staudruckes als Funktion der aufgenommenen Rußmenge. # bezeichnet das Dieselpartikelfilter ohne Overcoat aus dem Vergleichsbeispiel, #ov das Dieselpartikelfilter mit Overcoat aus Beispiel 2. In Figur 9 wurden beide gemessenen Kurven durch Subtraktion des um 1 verringerten Achsenabschnittswertes der Kurve für das Bauteil # ohne Overcoat korrigiert, um den direkten Einfluß des Overcoats zu zeigen.

Es ist deutlich zu erkennen, daß das Filter mit Overcoat #ov ausgehend vom gleichen Initialstaudruck einen erheblich geringeren Anstieg im auf die Tiefenfiltration zurückzuführenden Bereich der Staudruckkurve zeigt. Die beobachtete Staudruck-Differenz zwischen dem Dieselpartikelfilter mit Overcoat und dem Dieselpartikelfilter ohne Overcoat beträgt ca. 6 mbar.

## Patentansprüche

1. Dieselpartikelfilter enthaltend ein keramisches Wandflußfiltersubstrat und eine in den Anströmkanälen aufgebrachte Beschichtung aus hochschmelzendem Material, die so beschaffen ist, dass sie die die Anströmkanäle und Abströmkanäle verbindenden Poren in der Wand anströmseitig für Rußpartikel verschließt, ohne dabei den Durchtritt der gasförmigen Abgasbestandteile zu verhindern,
wobei die Beschichtung mehrheitlich ein oder mehrere hochschmelzende Oxide enthält, deren Partikelgrößen den Porengrößen in der Wand des Wandflußfiltersubstrates derart angepasst wird,
dass der d₅₀-Wert der Partikelgrößenverteilung der Oxide gleich oder größer dem d₅-Wert der Porengrößenverteilung des Wandflußfiltersubstrates ist,
wobei zugleich der d₉₀-Wert der Partikelgrößenverteilung der Oxide gleich oder größer dem d₉₅-Wert der Porengrößenverteilung des Wandflußfiltersubstrates ist,
wobei die Oxide einen Partikelgrößenverteilung aufweisen mit einem d₅₀-Wert zwischen 10 und 15 µm und einem d₉₀-Wert zwischen 25 und 40 µm,
wobei unter dem d₅₀-Wert bzw. dem d₉₀-Wert der Partikelgrößenverteilung der Oxide zu verstehen ist, daß 50 % bzw. 90 % des Gesamtvolumens der Oxide nur solche Partikel enthält, deren Durchmesser kleiner oder gleich dem als d₅₀ bzw. d₉₀ angegebenen Wert ist,
und wobei unter d₅-Wert bzw. dem d₉₅-Wert der Porengrößenverteilung des Wandflußfiltersubstrates zu verstehen ist, daß 5 % bzw. 95 % des gesamten, durch Quecksilberporosimetrie bestimmbaren Porenvolumens gebildet werden durch Poren, deren Durchmesser kleiner oder gleich dem als d₅ bzw. als d₉₅ angegebenen Wert ist.

2. Dieselpartikelfilter nach Anspruch 1, **dadurch gekennzeichnet, dass** die Oxide ausgewählt sind aus der Gruppe bestehend aus Aluminiumoxid, Selten-Erdmetall-stabilisiertes Aluminiumoxid, Selten-Erdmetall-Sesquioxid, Titandioxid, Zirkonoxid, Cer-Zirkon-Mischoxid, Vanadiumpentoxid, Vanadiumtrioxid, Wolframtrioxid, Molybdäntrioxid und Mischungen davon.

3. Dieselpartikelfilter nach, Anspruch 2, **dadurch gekennzeichnet, dass** die Beschichtung eine Schichtdicke von 10 bis 150 µm aufweist.

4. Dieselpartikelfilter nach einem der vorstehenden Ansprüche, **dadurch gekennzeichnet, dass** das Wandflußfiltersubstrat aus Siliciumcarbid, Cordierit oder Aluminiumtitanat gefertigt ist und die in den Wänden zwischen An- und Abströmkanälen enthaltenen Poren einen mittleren Durchmesser zwischen 5 und 50 µm aufweisen.

5. Dieselpartikelfilter nach Anspruch 4, **dadurch gekennzeichnet, dass** das Wandflußfiltersubstrat eine katalytisch aktive Beschichtung und/oder eine die Rußzündtemperatur absenkende Beschichtung enthält, welche überwiegend in den Poren der Wand zwischen An- und Abströmkanälen vorliegt.

6. Dieselpartikelfilter nach Anspruch 5, **dadurch gekennzeichnet, dass** auf die in den Anströmkanälen aufgebrachte Beschichtung aus hochschmelzendem Material, die so beschaffen ist, dass sie die die Anströmkanäle und Abströmkanäle verbindenden Poren in der Wand anströmseitig für Rußpartikel verschließt, ohne dabei den Durchtritt der gasförmigen Abgasbestandteile zu verhindern, eine zusätzliche katalytisch aktive Beschichtung oder/und eine zusätzliche, die Rußzündtemperatur absenkende Beschichtung aufgebracht ist.

7. Dieselpartikelfilter nach einem der Ansprüche 1 bis 3, **dadurch gekennzeichnet, dass** der Beschichtung, die mehrheitlich ein oder mehrere hochschmelzende Oxide enthält, oxidationskatalytisch oder reduktionskatalytisch wirkende Komponenten und/oder Komponenten, die die Rußzündtemperatur absenken können, durch Beimischung oder Imprägnierung beigefügt sind.

## Claims

1. Diesel particulate filter containing a ceramic wall flow filter substrate and a coating of refractory material applied in the inflow channels, provided in such a manner that it closes the pores in the wall which connect the inflow channels and outflow channels to soot particles on the inflow side, without thereby blocking the passage of the gaseous exhaust components,
wherein the coating predominately contains one or more refractory oxides, the particle sizes of which are adapted to the pore sizes in the wall of the wall flow filter substrate such that
the d₅₀ value of the particle size distribution of the oxides is equal to or greater than the d₅ value of the pore size distribution of the wall flow filter substrate,
wherein, simultaneously, the d₉₀ value of the particle size distribution of the oxides is equal to or greater than the d₉₅ value of the pore size distribution of the wall flow filter substrate,
wherein the oxides have a particle size distribution having a d₅₀ value between 10 and 15 µm and a d₉₀ value between 25 and 40 µm,
wherein the d₅₀ value or the d₉₀ value of the particle size distribution of the oxides is understood in such a way that 50% or 90%, respectively, of the total volume of the oxides contains only such particles whose diameter is less than or equal to the given d₅₀ or d₉₀ value,
and wherein the d₅ value or the d₉₅ value of the particle size distribution of the wall flow filter substrate is understood in such a way that 5% or 95% of the total volume of the pores determinable by mercury porosimetry is formed by pores whose diameter is less than or equal to the given d₅ or d₉₅ value.

2. Diesel particulate filter according to claim 1, **characterized in that** the oxides are selected from the group consisting of aluminum oxide, rare earth-metal-stabilized aluminum oxide, rare earth metal sesquioxide, titanium dioxide, zirconium oxide, cerium zirconium mixed oxide, vanadium pentoxide, vanadium trioxide, tungsten trioxide, molybdenum trioxide, and mixtures thereof.

3. Diesel particulate filter according to claim 2, **characterized in that** the coating has a layer thickness of 10 to 150 µm.

4. Diesel particulate filter according to one of the preceding claims, **characterized in that** the wall flow filter substrate is made of silicon carbide, cordierite, or aluminum titanate, and the pores contained in the walls between inflow and outflow channels have an average diameter between 5 and 50 µm.

5. Diesel particulate filter according to claim 4, **characterized in that** the wall flow filter substrate contains a catalytically-active coating and/or a coating that lowers the soot ignition temperature, which is predominantly present in the pores of the wall between the inflow and outflow channels.

6. Diesel particulate filter according to claim 5, **characterized in that** an additional catalytically-active coating and/or an additional coating that lowers the soot ignition temperature is applied to the coating of refractory material applied to the inflow channels, which coating is provided in such a manner that it closes the pores in the wall which connect the inflow channels and outflow channels to soot particles on the inflow side, without thereby blocking the passage of the gaseous exhaust components.

7. Diesel particulate filter according to one of claims 1 through 3, **characterized in that** oxidation-catalytically- or reduction-catalytically-active components and/or components that can lower the soot ignition temperature are added to the coating containing predominately one or more refractory oxides by mixing or impregnation.

## Revendications

1. Filtre à particules pour moteurs diesel contenant un substrat de filtre à parois filtrantes en céramique et un revêtement, appliqué dans les conduits d'admission, en matériau à haut point de fusion, qui est conçu de manière à fermer les pores, reliant les conduits d'admission et les conduits d'évacuation, dans la paroi côté arrivée pour les particules de suie, sans empêcher le passage des constituants gazeux des gaz d'échappement,
le revêtement contenant majoritairement un ou plusieurs oxydes à haut point de fusion, dont les dimensions de particule sont adaptées aux dimensions des pores dans la paroi du substrat de filtre à parois filtrantes de manière telle
que la valeur d₅₀ de la distribution des dimensions de particule des oxydes est identique ou supérieure à la valeur d₅ de la distribution des dimensions de pore du substrat de filtre à parois filtrantes,
la valeur d₉₀ de la distribution des dimensions de particule des oxydes étant simultanément identique ou supérieure à la valeur d₉₅ de la distribution des dimensions de pore du substrat de filtre à parois filtrantes,
les oxydes présentant une distribution des dimensions de particule avec une valeur d₅₀ entre 10 et 15 µm et avec une valeur d₉₀ entre 25 et 40 µm,
la valeur d₅₀ ou, selon le cas, la valeur d₉₀ de la distribution des dimensions de particule des oxydes signifiant que respectivement 50 % ou 90 % du volume total des oxydes ne contiennent que des particules dont le diamètre est inférieur ou identique à la valeur indiquée respectivement comme d₅₀ ou d₉₀
et la valeur d₅ ou, selon le cas, la valeur d₉₅ de la distribution des dimensions de pore du substrat de filtre à parois filtrantes signifiant que respectivement 5 % ou 95 % du volume total des pores, pouvant être déterminé par porosimétrie au mercure, sont formés par des pores dont le diamètre est inférieur ou identique à la valeur indiquée respectivement comme d₅ ou d₉₅.

2. Filtre à particules pour moteurs diesel selon la revendication 1, **caractérisé en ce que** les oxydes sont sélectionnés dans le groupe constitué par l'oxyde d'aluminium, l'oxyde d'aluminium stabilisé par un métal des terres rares, le sesquioxyde de métal des terres rares, le dioxyde de titane, l'oxyde de zirconium, l'oxyde mixte de cérium et zirconium, le pentoxyde de vanadium, le trioxyde de vanadium, le trioxyde de tungstène, le trioxyde de molybdène et leurs mélanges.

3. Filtre à particules pour moteurs diesel selon la revendication 2, **caractérisé en ce que** le revêtement présente une épaisseur de couche de 10 à 150 µm.

4. Filtre à particules pour moteurs diesel selon l'une des revendications précédentes, **caractérisé en ce que** le substrat de filtre à parois filtrantes est réalisé en carbure de silicium, en cordiérite ou en titanate d'aluminium et les pores contenus dans les parois entre les conduits d'admission et les conduits d'évacuation présentent un diamètre moyen entre 5 et 50 µm.

5. Filtre à particule pour moteurs diesel selon la revendication 4, **caractérisé en ce que** le substrat de filtre à parois filtrantes contient un revêtement catalytiquement actif et/ou un revêtement faisant baisser la température d'allumage de la suie, qui est présent principalement dans les pores de la paroi entre les conduits d'admission et d'évacuation.

6. Filtre à particules pour moteurs diesel selon la revendication 5, **caractérisé en ce qu'**un revêtement supplémentaire catalytiquement actif et/ou un revêtement supplémentaire faisant baisser la température d'allumage de la suie est appliqué sur le revêtement, appliqué dans les conduits d'admission, en matériau à haut point de fusion, qui est conçu de manière à fermer les pores, reliant les conduits d'admission et les conduits d'évacuation, dans la paroi côté arrivée pour les particules de suie, sans empêcher le passage des constituants gazeux des gaz d'échappement.

7. Filtre à particules pour moteurs diesel selon l'une des revendications 1 à 3, **caractérisé en ce que** le revêtement, qui contient majoritairement un ou plusieurs oxydes à haut point de fusion, est additionné, par mélange ou par imprégnation, de composants à effet catalytique par oxydation ou catalytique par réduction et/ou de composants qui peuvent faire baisser la température d'allumage de la suie.
